# EUROPÄISCHE PATENTSCHRIFT

(11) **EP 2 612 550 B1**
(45) Veröffentlichungstag und Bekanntmachung des Hinweises auf die Patenterteilung: **15.08.2018**
(21) Anmeldenummer: 13150219.7
(22) Anmeldetag: 04.01.2013
(51) Int. Cl.: A01K 5/02, A01K 5/00, A01K 5/01, A01K 7/00

(54) **Futterschale für Nutztiere**
Feed tray for livestock
Bol à nourriture pour bétail

(30) Priorität: 04.01.2012 DE 202012000058 U
(43) Veröffentlichungstag der Anmeldung: 10.07.2013
(73) Patentinhaber: Big Dutchman International GmbH, 49377 Vechta-Calveslage (DE)
(72) Erfinder: Kruse, Klaus, 49565 Bramsche (DE)
(74) Vertreter: Eisenführ Speiser

(56) Entgegenhaltungen:
- EP-A1- 1 752 039
- BE-A- 411 691
- US-A- 1 562 620
- US-A- 5 105 769
- US-A- 5 809 934

## Beschreibung

Die Erfindung betrifft ein Futtertrogbehältnis mit einem Grundkörper mit einem Boden, mindestens einer Seitenwand sowie mit einem Rand an der Seitenwand, und mit einem von einer Innenwand des Boden und einer Innenwand der mindestens einen Seitenwand umschlossenen Innenraum, der insbesondere als Aufnahmebehältnis für Tiernahrung nutzbar ist.
Bei solchen Behältnissen besteht aufgrund zunehmenden Kostendrucks ein Bedarf, den Herstellungsprozess einfach auszugestalten, gleichzeitig aber eine technisch vorteilhafte Konstruktion des Aufnahmebehältnisses zu realisieren. In vielen Bereichen der Tierfütterung, z.B. im Zusammenhang mit der Schweineaufzucht, besteht das Problem, dass die Nahrung bei der Futteraufnahme aus dem Aufnahmebehältnis seitlich heraus befördert und verschüttet wird. Es hat sich sogar gezeigt, dass in vielen Fällen nur ein Bruchteil der bereitgestellten Nahrung tatsächlich aufgenommen wird; ein Großteil der Nahrung wird hingegen versehentlich aus den Aufnahmebehältnissen herausgeschoben. Die verschüttete Nahrung birgt gesundheitliche Gefahren, denn die Tiere nehmen dieses auf der Erde verteilte, verunreinigte Futter auch auf.
Für eine leichten und artgerechten Zugang sind Aufnahmebehältnisse in der Regel wannenartig ausgebildet. Da diese Wannen häufig flach und schalenartig sind, besteht ganz besonders die Gefahr, dass viel Futter aus der Wanne entfernt oder herausgespielt wird.
Es ist bekannt, bei einer Wanne die jeweiligen Seiten der Wanne hoch genug auszubilden, um einen Austrag von Futter zu verringern. Dies erzeugt jedoch große Umformraten, die den kostengünstigen Werkstoff häufig überfordern und zu Rissversagen im Zuge der Fertigung führen oder aufwendige Mehrstufentiefziehverfahren erfordern.
Es ist weiterhin bekannt, eine Bördelung oder dergleichen auszubilden. Eine Bördelung erfolgt dabei üblicherweise nach dem Tiefziehen und ggf. Schneiden bzw. Entgraten der Kante am oberen Rand einer tiefgezogenen Trogschale. Ist die Wanne bzw. Trogschale jedoch rund, oval, oder rechteckig mit umlaufender Kante ausgebildet, so ist dieser Fertigungsschritt nicht auf einfache Weise oder gar nicht durchführbar, denn die Bördelung kann dann meist nicht in einem einzelnen Verfahrensschritt eingebracht werden.
Bördelungen sind zudem in Bezug auf das Verletzungsrisiko oder auf Reinheitsanforderungen problematisch, denn zum einen besteht die Gefahr, dass Grate oder scharfe Kanten auftreten, zum anderen liegen durch solche Absätze meist auch unvermeidlich Hohlräume vor, die sich nur schwer reinigen lassen. Dies kann also gesundheitliche Gefahren für das Tier verursachen.
Aus BE 411 691 A ist ein Trog einer Tierfütterungsvorrichtung bekannt, dessen Größe durch abnehmbare Seiten anpassbar ist. Der Trog ist derart ausgestaltet, dass zusätzlich ein Austragen des darin enthaltenen Futtermittels durch einen Vorsprung verhindert werden soll. Der Vorsprung ist aus dem Rand des Troges ausbildet oder an dem Rand des Troges aufgebracht.

Aus US 5,105,769 A ist ein schüssel- bzw. kugelförmiger Trog bekannt. Diese Ausgestaltung soll das Herausstoßen der Nahrung aufgrund schwingender Bewegungen des Kopfes der Tiere vermeiden. Der Trog umfasst zusätzlich eine Fressschale, die von einem Randkragen umgeben ist. Der Randkragen ist als eine nach oben gerichtete Kante, als Rand der Fressschale ausgebildet und stellt eine Art Abgrenzung zur Umgebung dar.
In US 5,809,934 A ist eine weitere Ausgestaltungsmöglichkeit eines Futtertrogs aufgeführt. Dieser Futtertrog weist eine Verdickung an der Seitenwand im Bereich des Randes auf. Die langsam zulaufende Geometrie der Verdickung des Materials der Seitenwand soll Spritzer einer Flüssigkeit umlenken. Für ein derartig ausgestaltetes Futtertrogbehältnis werden synthetische Kunststoffe, Kompositharze, Polymer-Kunststoffe oder ähnliches verwendet, um die Fertigung einer derartigen Seitenwand zu ermöglichen.
Den genannten Ausgestaltungsmöglichkeiten eines Futtertrogs, insbesondere eines Futtertrogs für Schweine steht eine Reihe von Nachteilen gegenüber.
Es ist daher eine Aufgabe der vorliegenden Erfindung, ein einfach zu fertigendes Aufnahmebehältnis, z.B. in Form eines Futtertrogs, mit einem gut zugänglichen Innenraum bereitzustellen, welches Austragverluste verringert und bei welchem Tiernahrung hygienisch innerhalb des Aufnahmebehältnisses bereitgehalten werden kann.

Ferner ist es eine Aufgabe der vorliegenden Erfindung, einen einfach zu fertigenden Futtertrog bereitzustellen.
Erfindungsgemäß wird ein Futtertrogbehältnis der eingangs genannten Art bereitgestellt mit den Merkmalen des kennzeichnenden Teils des Anspruchs 1. Der Vorsprung weist einen Querschnitt mit Außenabmessungen auf, welche zur Innenwandung der Seitenwand im Bereich ihres oberen Randes hervorsteht. Der erfindungsgemäße Vorsprung hat den Vorteil, dass er sich als Absatzelement auf einfache Weise an eine beliebige Form des Aufnahmebehältnisses anpassen lässt. Ist das Aufnahmebehältnis mit engen Radien oder Ecken ausgebildet, so ist es von Vorteil, wenn der Vorsprung als gerundete Form ausgebildet ist, so dass er sich in einfacher Weise ohne Gefahr der Materialbeschädigung ausformen lässt. Insbesondere kann der Vorsprung für einen Verlauf des Randes in einer mehrfach und in unterschiedlichen Ebenen gekrümmten Weise ausgeformt sein. Der Vorsprung kann im Querschnitt halbkreisrund oder halboval ausgebildet sein.
Der Vorsprung kann aus der Seitenwand heraus einstückig ausgeformt sein. Hierdurch werden gegenüber anderen Fertigungsmethoden wie ein- oder mehrstufigen Umformverfahren vorteilhafte Fertigungsverfahren eröffnet, welche in effizienter Weise auf vorgefertigte Teile zurückgreifen und ein belastbares und geometrisch ausreichend gestaltbares Produkt ergeben. Das Aufnahmebehältnis, speziell sein Grundkörper kann weitgehend unabhängig vom Herstellungsprozess in seiner Grundform derart dimensioniert und ausgelegt werden, dass über den Rand der Seitenwand sowie über den Vorsprung die Tiefe des Futtertrogbehältnisses und die Form des Innenraums definierbar sind.
Das Aufnahmebehältnis kann wannenförmig sein, d.h. komplett oder zumindest über einen Teilbereich offen in eine Richtung, insbesondere zu der Oberseite hin. Als Wanne kann dabei ein Aufnahmebehältnis bezeichnet werden, welches eine relativ bedeutende Tiefe aufweist, und bei welchem die Seitenwandungen gegenüber der Vertikalen nicht wesentlich nach außen geneigt sind, d.h. einen annähernd senkrechten Winkel zum Boden bilden.

Das Aufnahmebehältnis kann insbesondere als Trogschale ausgeführt sein, also als Schale ganz ohne eine Abdeckung oder auch mit einem Deckel für einen Teilbereich, wobei die Trogschale Kopplungsmittel aufweisen kann, die dazu dienen, um mit einem Futterdosierer gekoppelt zu werden.

Gemäß eines Ausführungsbeispiels können die Seitenwand und der Boden bzw. die Grundfläche zueinander zumindest annähernd im rechten Winkel angeordnet sind, wobei der Boden zumindest in einem mittleren Bereich des Futtertrogbehältnisses im Wesentlichen eben verlaufen kann. Wahlweise weist das Futtertrogbehältnis vier Seiten und in der Draufsicht eine etwa rechteckige Grundfläche auf, wobei die im Wesentlichen vertikal verlaufende Seitenwand am Übergang von einer lateralen Seite auf eine benachbarte laterale Seite bevorzugt einen Radius beschreibt, welcher größer ist als die Querschnittsabmessung des Vorsprungs in diesem Bereich.

Gemäß eines Ausführungsbeispiels ist der Vorsprung in der Seitenwand beabstandet zum Rand der Seitenwand angeordnet ist, wobei die Seitenwand und der Rand vollständig umlaufend an dem Grundkörper vorliegen und der Vorsprung vollständig umlaufend an dem Rand vorliegt.

Gemäß einer Variante kann der Rand im Wesentlichen in einer Ebene verlaufen, wobei die Ebene z.B. parallel zum Boden oder einer durch Bodenaufstandspunkte am Boden definierten Fläche ausgerichtet sein kann. Wahlweise kann der Rand aber auch über einen gewissen Bereich entlang der Seitenwand von dieser Ebene abweichen, insbesondere nach unten in Richtung Boden, so dass ein Bereich festgelegt wird, in welchem ein erleichterter Zugang zu dem Innenraum geschaffen wird und eine erleichterte Nahrungsaufnahme möglich ist. Dabei kann der Vorsprung in diesem abgesenkten Randbereich auch mit größeren Querschnittsabmessungen ausgeführt sein, also weiter in den Innenraum hineinragen, als über dem nicht abgesenkten Bereich, um zu vermeiden, dass Nahrung über diesen abgesenkten Bereich herausgetragen wird.

Gemäß eines Ausführungsbeispiels ist der Vorsprung als rundes oder ovales Rohr gebildet oder als Rohr mit mehrseitiger, z.B. rechteckiger Querschnittsgeometrie, welches abgerundete Kanten aufweist. Wahlweise umgibt bzw. umschließt das Absatzelement bzw. Profil den Rand und weist dabei eine Querschnittsgeometrie auf, insbesondere eine runde Querschnittsgeometrie, welche nicht nur rohrartig, sondern entsprechend eines Massivteils auch als kreisförmige oder elliptische Fläche ausgeführt sein kann, um hierdurch die Fertigung durch leichtere Biegemöglichkeiten und Schweißbarkeit zu verbessern.

Gemäß eines Ausführungsbeispiel weist Der Vorsprung eine geschlossene Mantelfläche auf, so dass es im Querschnitt eine geschlossene Umfangskontur hat. Der Vorsprung ist dabei wahlweise an dem Rand in einer Lage angebracht, in welcher es die Seitenwand sowohl nach innen in Richtung des Innenraums als auch hierzu entgegengesetzt nach außen überragt. Dadurch kann sowohl ein innen liegender Absatz als auch ein außen liegender Absatz im Bereich des Randes der Seitenwand gebildet werden.

Gemäß eines Ausführungsbeispiel überragt Der Vorsprung die Seitenwand nach innen weiter als nach außen, so dass außen zwar auch ein für die Handhabung vorteilhafter Vorsprung gebildet wird, der den Eintrag von Schmutz in den Innenraum des Trogs verhindert und auch z.B. als Griff dienen kann, der stärkere Absatz jedoch an der Innenseite vorliegt. Das Absatzelement kann auch derart an der Seitenwand vorgesehen sein, dass es in Bezug auf die Seitenwand lediglich in den Innenraum übersteht und außen fluchtend zur Seitenwand verläuft.

Gemäß einem Ausführungsbeispiel weist der Vorsprung einen halbrunden oder halbovalen Querschnitt auf. Das Futtertrogbehältnis kann als ein Schweiß- oder Formteil ausgeführt sein, welches sich aus einem einzigen oder mehreren einzelnen Blechteilen zusammensetzt. Dabei kann das Futtertrogbehältnis ebenso wie der Vorsprung aus einem metallischen Werkstoff wie Aluminium, Stahl oder Edelstahl bestehen. Wahlweise ist das Futtertrogbehältnis ein Tiefziehteil, wobei das Absatzelement derart ausgebildet ist, dass es nach dem Tiefziehen mit dem Futtertrogbehältnis verbindbar ist, wahlweise materialschlüssig oder formschlüssig mit der Seitenwand. Das Futtertrogbehältnis kann auch ein Spritzgussteil sein.

Gemäß eines Ausführungsbeispiels ist der Vorsprung aus einem Profilabschnitt mit zwei Stirnseiten gebildet, bei welchem die Stirnseiten derart aneinandergrenzend angeordnet sind, dass der Vorsprung als ein umlaufendes Profilteil mit stetig verlaufender, geschlossener Außenfläche vorliegt, und dass der Grundkörper mindestens eine Ausbuchtung aufweist, welche einen gegenüber dem Boden tieferen Bodenbereich definiert und eine Stütze bildet, auf welcher das Futtertrogbehältnis ruhen kann.

Die Stirnseiten können einstückig ausgeformt oder aus mehreren Stücken zusammengesetzt, insbesondere verschweißt, verklebt oder formschlüssig miteinander verbunden sein. Dass die Stirnseiten formschlüssig miteinander verbindbar sind, kann besonders dann von Vorteil sein, wenn der Vorsprung selbst auch formschlüssig mit der Seitenwand bzw. dem Rand verbindbar ausgeführt ist, so dass das umlaufende Profilteil im Wesentlichen ohne spezielle Werkzeuge wie Schweißanlagen an dem Grundkörper befestigt werden kann. Dabei kann alternative auch eine Steck- oder Rastverbindung zwischen Profil und Seitenwand vorgesehen sein.

Das erfindungsgemäße Futtertrogbehältnis lässt sich durch ein Verfahren herstellen, bei welchem der Grundkörper in Form einer Schale oder Wanne hergestellt wird durch Tiefziehen, Druckausformen, Hydroformen oder durch Schweißen aus mehreren Schweißteilen, wobei vorgeschlagen wird, dass bei oder nach der Herstellung des Grundkörpers der Vorsprung in die vom Rand des Grundkörpers beschriebene Form eingebracht wird, dabei an dem Grundkörper ausgeformt wird und derart umlaufend entlang des ganzen Randes des Grundkörpers vorgesehen wird, dass zwischen dem Grundkörper und dem Rand sowie zwischen den Stirnseiten des Profils kein Zwischenraum vorliegt.

Der Vorsprung kann durch Bördeln in die beschriebene Form gebracht werden. Dabei kann einem ersten Bördelvorgang ein zweiter Bördelvorgang im Randbereich folgen

Die Verbindung zwischen dem Grundkörper bzw. der Seitenwand und dem Vorsprung kann z.B. formschlüssig oder stoffschlüssig ausgeführt sein. Bei Formschluss können Rastprofile an dem Vorsprung sowie der Seitenwand vorgesehen sein, oder der Vorsprung wird als Profil auf den Rand gesteckt und weist hierzu eine schlitzartige Ausnehmung entlang seiner Mittellängsachse auf, welche der Formgebung der Seitenwand im Bereich des Randes entspricht.

Der Vorsprung kann insbesondere zum Zwecke einer stoffschlüssigen Verbindung im Querschnitt auch eine Form mit einem Fortsatz bzw. einer Zentrierfläche oder Fase aufweisen, so dass es von oben auf den Rand aufgesetzt werden kann, indem die Fase an dem Rand zur Anlage gebracht wird. Das auf diese Weise bereits vorpositionierte Profilteil kann dann zunächst mittels einiger Schweißpunkte angeheftet werden und dann in sicherer Lage vollständig umlaufend mit der Seitenwand verschweißt werden.

Gemäß einer Ausführungsform ist der Grundkörper durch Verschweißen mehrerer Blechabschnitte ausgebildet, wobei auch der Vorsprung mit der Seitenwand des Grundkörpers verschweißt wird.

Gemäß eines Ausführungsbeispiels ist das Futtertrogbehältnis mit einem Futterdosierer gekoppelt sein, welcher über Bohrungen in der Seitenwand mit dem Futtertrogbehältnis verbunden ist.

Der Futterdosierer kann auch Stützen aufweisen, auf welchen er ruht oder an welchen das Futtertrogbehältnis aufgehängt werden kann. Auch hierzu kann das Futtertrogbehältnis Kopplungsvorrichtungen aufweisen, an welchen sie mit den Stützen des Futterdosierers verbunden, beispielsweise verschraubt werden kann.

Anhand des in den Figuren gezeigten Ausführungsbeispiels wird die Erfindung noch weiter erläutert. Es zeigen:
Figur 1 eine perspektivische Ansicht eines Ausführungsbeispiels von schräg oben,
Figur 2 eine Draufsicht auf das Ausführungsbeispiel,
Figur 3 eine entlang der Linie E-E in Figur 1 geschnittene Seitenansicht des Ausführungsbeispiels, und
Figur 4 eine perspektivische Ansicht der Trogschale montiert an einem Futterautomaten.

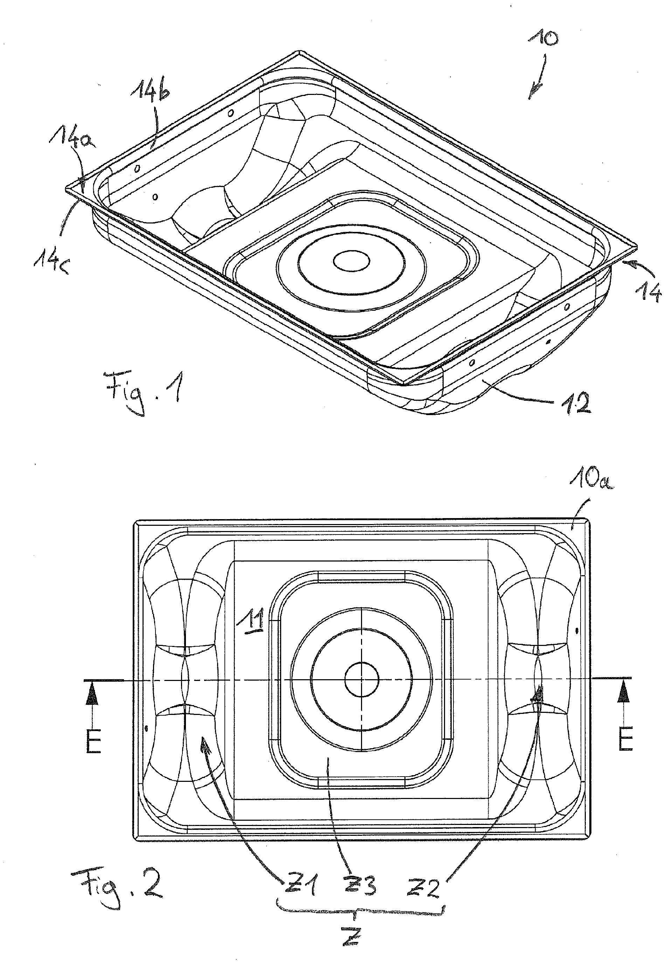

In Figur 1 ist ein Futtertrogbehältnis 10 abgebildet, welches aus einem in der Draufsicht gemäß Figur 2 annähernd rechteckigen Grundkörper 10a mit einem Boden 11, einer umlaufenden Seitenwand 12 sowie mit einem umlaufenden Randprofil 14 oben an der Seitenwand 12 gebildet ist. Das Futtertrogbehältnis weist einen sich aus drei Abschnitten Z1-3 zusammensetzenden Innenraum Z auf, welcher gegenüber der Umgebung mittels des Bodens 11.1-11.3, der Seitenwand 12 und des Randprofils 14 abgegrenzt ist.

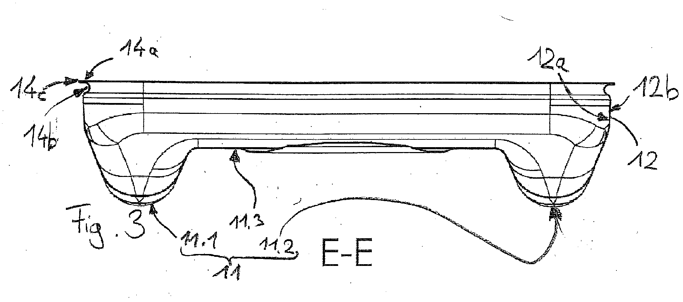

Wie aus Figur 3 gut zu erkennen, umfasst das Randprofil einen Rand 14a und einen unterhalb dieses Randes ausgebildeten Vorsprung 14b, der an dem Grundkörper 10a einstückig ausgeformt ist und die benachbarte Innenfläche 12a der Seitenwand 12 in Richtung des Innenraums Z nach innen überragt. Weiterhin umfasst das Randprofil einen nach außen stehenden Randkragen 14c, welcher die benachbarte Außenfläche 12b der Seitenwand 12 nach außenstehend überragt.

Sowohl der Vorsprung 14b als auch der Randkragen 14c sind vollständig umlaufend ausgebildet. Dadurch sind ein innen liegender Absatz und ein außen liegender Absatz gebildet. Der durch den Vorsprung 14b gebildete innenliegende Absatz verhindert, dass Futter aus dem Innenraum des Futtertrogs durch die Wühl und Fressbewegungen eines Schweines aus dem Innenraum herausgeschoben wird und neben den Futtertrog fällt, wo es verschmutzen und bei Fressaufnahme die Infektionsgefahr für die Tiere erhöhen würde. Der durch den Randkragen 14c gebildete äußere Absatz verhindert, dass Dreck von außen in den Innenraum des Futtertrogs hineingeschoben wird.

Ferner wurden durch unterschiedliche hohe Bodenbereiche im Grundkörper 10a zwei einander gegenüberliegende Ausbuchtungen Z1 und Z2 gebildet, zwischen denen ein erhöhtes Innenraumplateau Z3 angeordnet ist. Das Innenraumplateau Z3 hat ein höheres Bodenniveau 11.3 als die Ausbuchtungen Z1 und Z2. So kann auf das Innenraumplateau Z3 Futter von oben zudosiert wurden und verteilt sich in die zwei Ausbuchtungen Z1 und Z2, aus denen es dann von mehreren Schweinen zugleich aufgenommen werden kann.

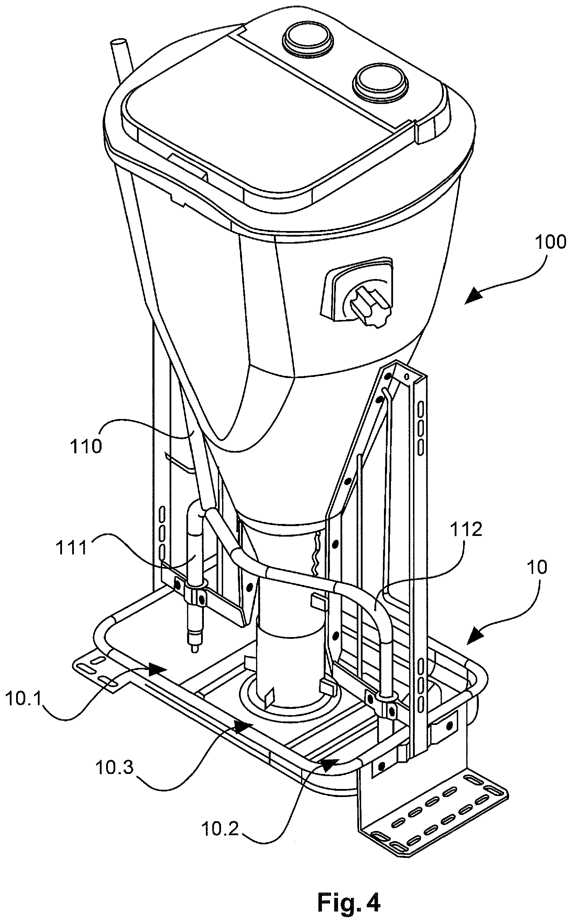

Es ist ersichtlich, dass der Radius, welchen der Vorsprung 14b im Bereich jeder der vier Ecken des annähernd rechteckigen Grundkörpers 10a entlang des Rand 12a beschreibt, größer ist als der Eckenradius des Grundkörpers in diesen Ecken.
Wie aus Figur 4 ersichtlich, sind in der Seitenwand 12 Bohrungen bzw. Aussparungen vorgesehen, über welche das Futtertrogbehältnis an einen Futterdosierer (100) koppelbar ist. Eine Austrittsöffnung des Futterdosierers mündet oberhalb des flachen Innenraumabschnitts 10.3.
Der Futterdosierer kann insbesondere Trockenfutter zudosieren. Das Trockenfutter kann dann schwerkraftbetätigt aus dem flacheren Innenraumabschnitt 10.3 in die tieferen Innenraumabschnitte 10.1 und 10.2 fließen.
Weiterhin ist einen Flüssigfutterzuleitung 110 vorhanden. Die Flüssigfutterzuleitung 110 teilt sich in zwei Ausbringleitungen 111, 112 auf, die unmittelbar oberhalb der tieferen Innenraumabschnitte 10.1 und 10.2 münden. Aus den Ausbringleitungen kann Flüssigfutter oder Futterzusatzstoffe direkt unter Umgehung des flacheren Abschnitts 10.3 in die tieferen Abschnitte 10.1, 10.2 zudosiert werden, wodurch Verschmutzungen und Verstopfungen im Bereich der Futtertrogschale vorgebeugt wird.

Die in den einzelnen Figuren gewählten Proportionen schematisch oder vereinfacht dargestellt sein und/oder einige Teile bzw. Teilelemente nicht dargestellt sein, beispielsweise zwecks besserem Verständnis, was jedoch nicht Funktion der Zeichnungen zur Offenbarung wesentlicher technischer Sachverhalte wie z.B. Größenverhältnisse in Frage stellen kann. Die Erfindung ist somit nicht auf die angegebene Darstellung beschränkt. Vielmehr werden sämtliche Ausführungsformen und Varianten als zur Erfindung gehörig angesehen, gemäß den nachstehenden Ansprüchen.

## Patentansprüche

1. Futtertrogbehältnis (10) mit einem Grundkörper (10a) mit einem Boden (11), mindestens einer Seitenwand (12) sowie mit einem Rand (14a) an der Seitenwand (12), und mit einem von einer Innenfläche des Boden und einer Innenfläche der mindestens einen Seitenwand umschlossenen Innenraum (Z), **dadurch gekennzeichnet, dass** im Bereich des Randes (14a) an der Seitenwand (12) ein relativ zur benachbarten Innenfläche der Seitenwand nach innen in den Innenraum vorstehender Vorsprung (14b) an der Seitenwand ausgebildet ist, der entlang des Randes (14a) verläuft,
- durch eine plastische Verformung eines Blechhalbzeugs ausgebildet ist, insbesondere mittels einer Bördelung, oder
- als rundes Rohr, insbesondere kreisrundes Rohr ausgebildet ist und mittig auf der benachbarten Seitenwand (12) aufgeschweißt ist.

2. Futtertrogbehältnis (10) nach Anspruch 1, **dadurch gekennzeichnet, dass** der Vorsprung (14b) in der Seitenwand beabstandet zum Rand (14a) der Seitenwand angeordnet ist, wobei die Seitenwand (12) und der Rand (14a) vollständig umlaufend an dem Grundkörper (10a) vorliegen und der Vorsprung (14b) vollständig umlaufend an dem Rand (14a) vorliegt.

3. Futtertrogbehältnis (10) nach Anspruch 1 oder 2, **dadurch gekennzeichnet, dass** der Vorsprung (14b) einen halbrunden oder halbovalen Querschnitt aufweist.

4. Futtertrogbehältnis (10) nach einem der Ansprüche 1 bis 3, **dadurch gekennzeichnet, dass** im Bereich des Randes ein nach außen über die benachbarte Aussenfläche (12b) der Seitenwand (12) hervorstehender Randkragen (14c) ausgebildet ist.

5. Futtertrogbehältnis (10) nach einem der Ansprüche 1 bis 4, **dadurch gekennzeichnet, dass** der Boden (11) einen ersten (11.1, 11.2) und einen zweiten (11.3) Bereich aufweist und dass der erste Bereich einen tieferen Innenraumabschnitt (Z1, Z2) begrenzt als der zweite Bereich.

6. Futtertrogbehältnis (10) nach Anspruch 5, **dadurch gekennzeichnet, dass** der zweite Bereich (11.3) zwischen einem linken (11.1) ersten Bereich und einem rechten (11.2) ersten Bereich angeordnet ist.

7. Futtertrogbehältnis (10) nach einem der Ansprüche 1 bis 6, wobei der Vorsprung (14b) durch die plastische Verformung des Blechhalbzeugs ausgebildet ist, **dadurch gekennzeichnet, dass** der Boden (11), die Seitenwand (12) und der Vorsprung (14b) und gegebenenfalls der Randkragen (14c) einstückig ausgebildet sind.

8. Futtertrogbehältnis (10) nach einem der Ansprüche 1 bis 7, **dadurch gekennzeichnet, dass** der Vorsprung (14b) aus einem Profilabschnitt mit zwei Stirnseiten gebildet ist, bei welchem die Stirnseiten derart aneinandergrenzend angeordnet sind, dass der Vorsprung als ein umlaufendes Profilteil mit stetig verlaufender, geschlossener Außenfläche vorliegt, und dass der Grundkörper (10a) mindestens eine Ausbuchtung (Z1, Z2) aufweist, welche einen gegenüber einem zweiten Bodenbereich(11.3) tieferen Bodenbereich (11.1, 11.2) definiert und eine Stütze bildet, auf welcher das Futtertrogbehältnis (10) ruhen kann.

9. Futtertrogbehältnis (10) nach einem der Ansprüche 1 bis 8, **gekennzeichnet durch** einen Futterdosierer mit einer Austrittsöffnung, die oberhalb eines zweiten Bodenbereichs (11.3) in einen flachen Innenraumabschnitt (Z3) mündet, der mit zumindest einem, vorzugsweise zwei benachbarten ersten, tieferen Innenraumabschnitten (Z1, Z2) zum schwerkraftbedingten Abfluss des zudosierten Futters aus dem zweiten Abschnitt in den/die ersten Abschnitt(e) in Verbindung steht.

10. Verwendung eines Futtertrogbehältnisses (10) nach einem der Ansprüche 1 bis 9 als Schweinefuttertrog, wobei das Futtertrogbehältnis (10) gegenüberliegende Bohrungen in der Seitenwand (12) aufweist zur Kopplung mit einem Futterdosierer.

## Claims

1. Feeding trough receptacle (10) comprising a main body (10a) having a base (11), at least one side wall (12) and a rim (14a) on the side wall (12), and comprising an interior (Z) which is enclosed by an inner surface of the base and an inner surface of the at least one side wall, **characterised in that**, in the region of the rim (14a) on the side wall (12), a protrusion (14b) which protrudes inwardly into the interior relative to the adjacent inner surface of the side wall is formed on the side wall, which protrusion runs along the rim (14a),
- is formed by plastic deformation of a semi-finished sheet-metal part, in particular by beading, or
- is formed as a round tube, in particular as a circular tube, and is welded centrally onto the adjacent side wall (12).

2. Feeding trough receptacle (10) according to claim 1, **characterised in that** the protrusion (14b) is arranged in the side wall at a distance from the rim (14a) of the side wall, wherein the side wall (12) and the rim (14a) run all the way around the main body (10a) and the protrusion (14b) runs all the way around the rim (14a).

3. Feeding trough receptacle (10) according to claim 1 or 2, **characterised in that** the protrusion (14b) has a semicircular or semi-oval cross-section.

4. Feeding trough receptacle (10) according to one of claims 1 to 3, **characterised in that** a rim collar (14c) which protrudes outwardly beyond the adjacent outer surface (12b) of the side wall (12) is formed in the region of the rim.

5. Feeding trough receptacle (10) according to one of claims 1 to 4, **characterised in that** the base (11) has a first region (11.1, 11.2) and a second region (11.3), and **in that** the first region delimits a deeper interior section (Z1, Z2) than the second region.

6. Feeding trough receptacle (10) according to claim 5, **characterised in that** the second region (11.3) is arranged between a left-hand first region (11.1) and a right-hand first region (11.2).

7. Feeding trough receptacle (10) according to one of claims 1 to 6, wherein the protrusion (14b) is formed by plastic deformation of the semi-finished sheet-metal part, **characterised in that** the base (11), the side wall (12) and the protrusion (14b) and optionally the rim collar (14c) are formed in one piece.

8. Feeding trough receptacle (10) according to one of claims 1 to 7, **characterised in that** the protrusion (14b) is formed of a profiled section with two end faces, in which the end faces are arranged in a manner adjoining one another such that the protrusion is in the form of a circumferential profiled part with a continuously running, closed outer surface, and **in that** the main body (10a) has at least one indentation (Z1, Z2) which defines a base region (11.1, 11.2) that is deeper than a second base region (11.3) and which forms a support on which the feeding trough receptacle (10) can rest.

9. Feeding trough receptacle (10) according to one of claims 1 to 8, **characterised by** a feed metering means with an outlet opening which opens above a second base region (11.3) into a flat interior section (Z3) that is connected to at least one, preferably two, adjacent first deeper interior sections (Z1, Z2) for discharging the metered feed from the second section into the first section(s) under the effect of gravity.

10. Use of a feeding trough receptacle (10) according to one of claims 1 to 9 as a pig feeding trough, wherein the feeding trough receptacle (10) has holes located opposite one another in the side wall (12) for coupling to a feed metering means.

## Revendications

1. Récipient formant mangeoire (10) avec un corps de base (10a) avec un fond (11), au moins une paroi latérale (12) ainsi qu'avec un bord (14a) au niveau de la paroi latérale (12), et avec un espace intérieur (Z) entouré par une surface intérieure du fond et une surface intérieure de l'au moins une paroi latérale, **caractérisé en ce qu'**est réalisée, dans la zone du bord (14a) au niveau de la paroi latérale (12), au niveau de la paroi latérale, une saillie (14b) faisant saillie vers l'intérieur dans l'espace intérieur par rapport à la surface intérieure adjacente de la paroi latérale, qui s'étend le long du bord (14a),
- est réalisée par une déformation plastique d'un produit semi-fini en tôle, en particulier au moyen d'un bordage, ou
- est réalisée en tant que tuyau rond, en particulier d'un tuyau rond circulaire, et est appliquée par soudage au centre sur la paroi latérale (12) adjacente.

2. Récipient formant mangeoire (10) selon la revendication 1, **caractérisé en ce que** la saillie (14b) est disposée dans la paroi latérale à distance par rapport au bord (14a) de la paroi latérale, dans lequel la paroi latérale (12) et le bord (14a) sont présents totalement en périphérie au niveau du corps de base (10a) et la partie faisant saille (14b) est présente totalement en périphérie au niveau du bord (14a).

3. Récipient formant mangeoire (10) selon la revendication 1 ou 2, **caractérisé en ce que** la saillie (14b) présente une section transversale semi-ronde ou semi-ovale.

4. Récipient formant mangeoire (10) selon l'une quelconque des revendications 1 à 3, **caractérisé en ce qu'**est réalisé, dans la zone du bord, un collet de bord (14c) ressortant vers l'extérieur par-dessus la surface extérieure (12b) adjacente de la paroi latérale (12).

5. Récipient formant mangeoire (10) selon l'une quelconque des revendications 1 à 4, **caractérisé en ce que** le fond (11) présente une première (11.1, 11.2) et une deuxième (11.3) zone, et que la première zone délimite une section d'espace intérieur (Z1, Z2) plus profonde que la deuxième zone.

6. Récipient formant mangeoire (10) selon la revendication 5, **caractérisé en ce que** la deuxième zone (11.3) est disposée entre une première zone à gauche (11.1) et une première zone à droite (11.2).

7. Récipient formant mangeoire (10) selon l'une quelconque des revendications 1 à 6, dans lequel la saillie (14b) est réalisée par la déformation plastique du produit semi-fini en tôle, **caractérisé en ce que** le fond (11), la paroi latérale (12) et la saillie (14b) et éventuellement le collet de bord (14c) sont réalisés d'un seul tenant.

8. Récipient formant mangeoire (10) selon l'une quelconque des revendications 1 à 7, **caractérisé en ce que** la saillie (14b) est formée à partir d'une section profilée avec deux côtés frontaux, dans lequel les côtés frontaux sont disposés de manière à se jouxter les uns les autres de telle manière que la saillie est présente en tant qu'une partie profilée périphérique avec une surface extérieure fermée s'étendant en continu, et que le corps de base (10a) présente au moins une protubérance (Z1, Z2), qui définit une zone de fond (11.1, 11.2) plus profonde par rapport à une deuxième zone de fond (11.3) et forme un appui, sur lequel le récipient formant mangeoire (10) peut se reposer.

9. Récipient formant mangeoire (10) selon l'une quelconque des revendications 1 à 8, **caractérisé par** un doseur d'aliments pour animaux avec un orifice de sortie, qui débouche au-dessus d'une deuxième zone de fond (11.3) dans une section d'espace intérieur (Z3) plate, qui est reliée à au moins une, de préférence deux premières sections d'espace intérieur (Z1, Z2) plus profondes servant à l'évacuation liée à la force de gravité des aliments pour animaux dosés hors de la deuxième section dans la/les première(s) section(s).

10. Utilisation d'un récipient formant mangeoire (10) selon l'une quelconque des revendications 1 à 9 en tant que mangeoire pour porcs, dans laquelle le récipient formant mangeoire (10) présente des alésages se faisant face dans la paroi latérale (12) pour le couplage à un doseur d'aliments pour animaux.
